# EUROPÄISCHE PATENTSCHRIFT

(11) **EP 3 717 872 B1**
(45) Veröffentlichungstag und Bekanntmachung des Hinweises auf die Patenterteilung: **06.09.2023**
(21) Anmeldenummer: 18839803.6
(22) Anmeldetag: 03.12.2018
(51) Int. Cl.: G01D 11/24, G01D 11/30

(54) **VORRICHTUNG ZUM MESSEN UND/ODER REGELN VON EINER MATERIALSTRÖMUNG UND VERFAHREN ZUR HERSTELLUNG**
DEVICE FOR MEASURING AND/OR REGULATING A MATERIAL FLOW AND METHOD FOR THE PRODUCTION THEREOF
DISPOSITIF DE MESURE ET/OU DE RÉGULATION D'UN ÉCOULEMENT DE MATIÈRE ET PROCÉDÉ DE FABRICATION

(30) Priorität: 03.12.2017 DE 102017011119
(43) Veröffentlichungstag der Anmeldung: 07.10.2020
(73) Patentinhaber: MFT MEISTER FLOW TECHNOLOGY HOLDING GMBH & CO. KG, 63831 Wiesen (DE)
(72) Erfinder: BECKER, Peter, 63831 Wiesen (DE); KEUPER, Melanie, 63831 Wiesen (DE)
(74) Vertreter: Nitz, Astrid
(86) Internationale Anmeldenummer: PCT/DE2018/000356
(87) Internationale Veröffentlichungsnummer: WO 2019/105499

(56) Entgegenhaltungen:
- DE-A1-102012 111 757
- DE-A1-102014 119 073
- US-A1- 2014 260 668
- US-A1- 2016 202 101

## Beschreibung

Die Erfindung betrifft eine Vorrichtung zum Messen und/oder Regeln einer Materialströmung nach dem Oberbegriff von Anspruch 1 und ein Verfahren zum Messen einer Materialströmung von Anspruch 10.

Bekannt ist es, eine Strömung mittels in Fluidströmungsleitungen für die Messung jeweils vorgesehenen Messeinrichtungen zu messen. Nachteilig ist es, dass die Messeinrichtung unflexibel ist, sowohl in der Art und Ort der Anbringung als der Art der Messeinrichtung.

US 2014/0260668 offenbart ein Ultraschallflussmesser mit einem integriert geformten akustischem lärmabschwächendem Mittel, wobei vorbeilaufende Strömungen beeinflusst werden.

DE 10 2012 111 757 A1 offenbart eine Vorrichtung zur Ultraschall-Durchflussmessung in Schlauch- und/oder Kunststoffrohrsystemen mit Durchflussmesssensoren, die aufgesetzt sind.

Aufgabe der vorliegenden Erfindung ist es, eine einfache und zuverlässige Vorrichtung zum Messen einer Materialströmung bereitzustellen, unter Vermeidung der Nachteile des Stands der Technik.

Die Aufgabe wird erfüllt durch eine Vorrichtung zum Messen und/oder Regeln von Eigenschaften einer Materialströmung, insbesondere Aerosolströmung und/oder Fluidströmung, insbesondere einer Gasströmung, insbesondere einer Luftströmung, und/oder einer Flüssigkeitsströmung, umfassend ein Leitungsmittel für die Materialströmung mit zumindest einem Leitungsabschnitt, nämlich einen Rohrabschnitt, in dem die Materialströmung durchströmend und/oder umströmend durchleitbar ist, wobei zumindest eine Funktionseinheit vorhanden ist, wobei zumindest ein Mittel zum Anbringen einer Funktionseinheit, nämlich eines Sensors und/oder eines Signalgebermittels und/oder Signalempfangseinheit zur Messung und/oder Weitergabe von Eigenschaften der Materialströmung, nämlich ein RFID- und/oder NFC-Mittel und/oder Bluetooth, das insbesondere mit einer Dockingstation und/oder einem Computer und/oder Smartphone gekoppelt ist, in das Leitungsmittel integriert ist, wobei zumindest das Leitungsmittel für die Materialströmung mit dem Mittel zum Anbringen einer Funktionseinheit mittels eines additiven Fertigungsverfahrens, nämlich 3D-Druckverfahrens, im Wesentlichen einstückig, aufgebaut ist, und die Funktionseinheit als Wandungsmitttel oder Innenmittel in einer Wandung des Leitungsmittels mittels 3D Druckverfahren in die Wandung eingebracht ist, wobei die Wandung im Bereich des Wandungsmittels oder Innenmittels glatt verläuft und keine Durchführung durch die Wandung gebildet Ist, so dass Strömungshindernisse vermieden werden.

Die vorliegende Erfindung ermöglicht es, auf jeweils spezifische, individuell angepasste Zusatzbaukomponenten für Leitungsmittel oder auch andere Bereiche einer Strömungsvorrichtung, für die Messaufnahme und Weitergabe verzichten zu können. Der Anwender kann in einem späteren Zeitpunkt nach dem Einbau Funktionseinheiten einfach entfernen oder hinzufügen, insbesondere ohne die Materialströmung zu unterbrechen oder die Vorrichtung aus der Strömung herausnehmen zu müssen. Die Vorrichtung ist sehr flexibel zu verwenden, für alle Arten von Materialströmungen, insbesondere auch für eine Suspension oder Emulsion von festen oder flüssigen Partikeln, oder auch In Form von strömendem Pulver. Durch die im Voraus vorgesehenen vielfältigen Mittel zum Anbringen und/oder Hindurchführen einer Funktionseinheit kann der Anwender die Sensorik modular einsetzen und/oder nachrüsten. Die Mittel zum Anbringen und/oder Hindurchführen einer Funktionseinheit können auch bei komplexen Designs der Rohrleitungsabschnitte durch das additive Fertigungsverfahren, insbesondere 3D-Druckverfahren, vorgesehen werden, mit unterschiedlichem Gewicht, Wanddicken, Material etc. Insbesondere können Materialien im Wesentlichen angepasst an die Eigenschaften der Materialströmung, insbesondere des Fluids, ausgewählt werden, insbesondere auch Materialgruppenübergreifend, so dass beispielsweise einerseits das Fluidum sicher geleitet wird und andererseits die Mittel zum Anbringen und/oder Hindurchführen einer Funktionseinheit stabil und sicher gehalten sind. Verbindungsstellen bzw. Übergangsstellen zwischen einzelnen Rohrelementen, die besonders anfällig für Leckage oder Alterung sind, können je nach Anforderungen des Verwenders einstückig gefertigt werden. Weitere Leitungsmittel und/oder Mittel zum Anbringen und/oder Hindurchführen können insbesondere einstückig damit durch additive Fertigung, 3-D Druck, vorgesehen sein, wobei insbesondere auch dabei vorteilhaft Strömungshindernisse vermieden werden und Leckage oder Alterungsprozesse an Übergangsstellen von verschiedenen Einheiten, die durch aggressive Materialströmungen besonders stark hervorgerufen werden können, entfallen. Durch die vorgeschlagene Vorrichtung können Sensoren mit ihren unterschiedlichsten Anforderung an die Art und Ausführung der Aufnahme leicht in tegriert werden, auch bereits im Vorfeld einer Normenänderung, ohne dass die Leitungsabschnitte ausgetauscht werden müssten.

Vorteilhaft ist es, wenn zumindest eine Funktionseinheit nachrüstbar und/oder abnehmbar ausgebildet ist. Die Funktionseinheit kann einen Sensor umfassen, der beispielsweise direkt bei der Herstellung in der Vorrichtung zum Messen und/oder Regeln eingebracht ist und anschließend erst - bei Bedarf durch den Nutzer - durch eine abnehmbare Kontaktierung mit eine Empfangs- und/oder Regeleinheit kontaktiert wird.

Vorteilhaft ist es, wenn zumindest eine Funktionseinheit medienberührend und/oder beabstandet zum Medium der Materialströmung einsetzbar ist, wobei das Mittel zum Anbringen und/oder die Funktionseinheit als Außenmittel außen an dem Leitungsmittel, insbesondere ein Ultraschallmesser, und/oder als Wandungsmittel in einer Wandung des Leitungsmittels, insbesondere ein Temperaturfühler, und/oder als Innenmittel innen an dem Leitungsmittel, insbesondere ein Druckmesser und/oder ein pH-Wert-Messer.

Vorteilhaft ist es, wenn mehrere Mittel zum Anbringen und/oder Hindurchführen einer Funktionseinheit vorzusehen sind, insbesondere als normierte Einheit.

Vorteilhaft ist es, wenn zumindest ein Mittel zum Anbringen und/oder Hindurchführen einer Funktionseinheit bei Nichtverwendung verschließbar ist.

Vorteilhaft ist es, wenn die Funktionseinheit einen Sensor und/oder Signalgebermittel zur Weitergabe von Messsignalen und/oder Signalempfangseinheit umfasst.

Vorteilhaft ist es, wenn die Funktionseinheit umfasst: insbesondere ein Mittel zum Messen des Drucks, der Temperatur, des Durchflusses, des pH-Wert, des Co2-Gehalts, der Viskosität, des Härtegrads, des Mineralstoffgehalts, einen Schwebekörper-Durchflussmesser, eine Ultraschallmesseinrichtung, insbesondere ein RFID- und/oder NFC-Mittel und/oder Bluetooth, das insbesondere mit einer Dockingstation und/oder einem Computer und/oder Smartphone gekoppelt ist.

Vorteilhaft ist es, wenn zumindest das Leitungsmittel mit dem Mittel zum Anbringen und/oder Hindurchführen einer Funktionseinheit mittels eines additiven Fertigungsverfahrens, im Wesentlichen einstückig, insbesondere mit Metall und/oder Kunststoff und/oder Keramikpulver und/oder Gläsern aufzubauen ist.

Vorteilhaft ist es, wenn das Leitungsmittel für die Materialströmung mit dem Mittel zum Anbringen und/oder Hindurchführen einer Funktionseinheit mit einer verstärkenden Struktur, insbesondere Wabenstruktur, aufzubauen ist, wodurch die Stabilität des Leitungsmittels für die Fluidströmung zu erhöhen, Vibrationen zu dämpfen, Eigenfrequenzen zu glätten und/oder das Gewicht zu verringern ist.

Die Aufgabe wird ebenfalls gelöst durch ein Verfahren zum Herstellen einer Vorrichtung zum Messen und/oder Regeln von Eigenschaften einer Materialströmung, insbesondere Aerosolströmung und/oder Fluidströmung, insbesondere einer Gasströmung, insbesondere einer Luftströmung, und/oder einer Flüssigkeitsströmung, wobei ein Leitungsmittel für die Materialströmung mit zumindest einem Leitungsabschnitt, nämlich einen Rohrabschnitt, in dem die Materialströmung durchströmend und/oder umströmend durchleitbar ist, und eine Funktionseinheit aufgebaut werden, wobei zumindest ein Mittel zum Anbringen einer Funktionseinheit, nämlich eines Sensors und/oder eines Signalgebermittels und/oder Signalempfangseinheit zur Messung und/oder Weitergabe von Eigenschaften der Materialströmung, nämlich ein RFID- und/oder NFC-Mittel und/oder Bluetooth, das insbesondere mit einer Dockingstation und/oder einem Computer undloder Smartphone gekoppelt ist, in das Leitungsmittel integriert wird, wobei zumindest das Leitungsmittel für die Materialströmung mit dem Mittel zum Anbringen einer Funktionseinheit mittels eines additiven Fertigungsverfahrens, nämlich 3D-Druckverfahrens, im Wesentlichen einstückig, aufgebaut wird, wobei die Funktionseinheit als Wandungsmitttel oder Innenmittel in einer Wandung des Leitungsmittels mittels 3D Druckverfahren in die Wandung eingebracht wird, wobei die Wandung im Bereich des Wandungsmittels oder Innenmittels glatt verläuft und keine Durchführung durch die Wandung gebildet wird, so dass Strömungshindernisse vermieden werden.

Weitere Merkmale und Vorteile der Erfindung ergeben sich aus den Ansprüchen und der nachstehenden Beschreibung, in der Ausführungsbeispiele des Gegenstands der Erfindung in Verbindung mit den Zeichnungen näher erläutert sind. Die Erfindung ist durch die unabhängigen Ansprüche definiert und alle Ausführungsbeispiele, die sich auf ein Mittel zum Hindurchführen einer Funktionseinheit, oder eine Funktionseinheit als Außenmittel beziehen, sind nicht Teil der Erfindung.

Es zeigen:
- Fig. 1: einen Schnitt durch eine erfindungsgemäße Vorrichtung,
- Fig. 2: einen schematischen Längsschnitt durch eine erfindungsgemäße Vorrichtung und
- Fig. 3: einen schematischen Querschnitt durch eine Vorrichtung.

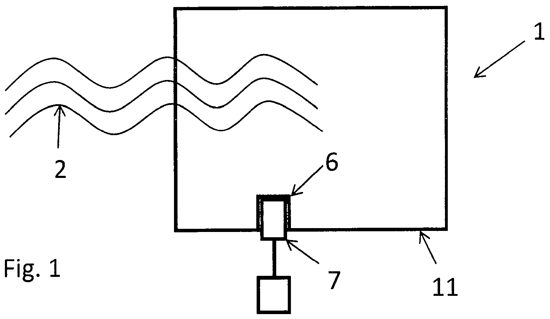

Fig. 1 zeigt einen Schnitt durch eine erfindungsgemäße Vorrichtung 1 zum Messen und/oder Regeln von Eigenschaften einer Materialströmung 2, insbesondere Aerosolströmung und/oder Fluidströmung, insbesondere einer Gasströmung, insbesondere einer Luftströmung, und/oder einer Flüssigkeitsströmung, umfassend ein Leitungsmittel 4 für die Materialströmung 2 mit zumindest einem Leitungsabschnitt 5, insbesondere einen Rohrabschnitt, in dem die Materialströmung durchströmend und/oder umströmend durchleitbar ist, wobei zumindest ein Mittel 6 zum Anbringen und/oder Hindurchführen einer Funktionseinheit 7, insbesondere eines Sensors 3 und/oder eines Signalgebermittels und/oder Signalempfangseinheit zur Messung und/oder Weitergabe von Eigenschaften der Materialströmung, in das Leitungsmittel 4 integriert ist, wobei zumindest das Leitungsmittel 4 für die Materialströmung mit dem Mittel 6 zum Anbringen und/oder Hindurchführen einer Funktionseinheit 7 mittels eines additiven Fertigungsverfahrens, insbesondere 3D-Druckverfahrens, im Wesentlichen einstückig, aufzubauen ist. Weitere nicht dargestellte Leitungsmittel 4 und/oder Mittel 6 zum Anbringen und/oder Hindurchführen können insbesondere einstückig damit durch additive Fertigung, 3-D Druck vorgesehen sein, wobei vorteilhaft Strömungshindernisse vermieden werden und Leckage oder Alterungsprozesse an Übergangsstellen von verschiedenen Einheiten, die durch aggressive Materialströmungen besonders stark hervorgerufen werden können, entfallen.

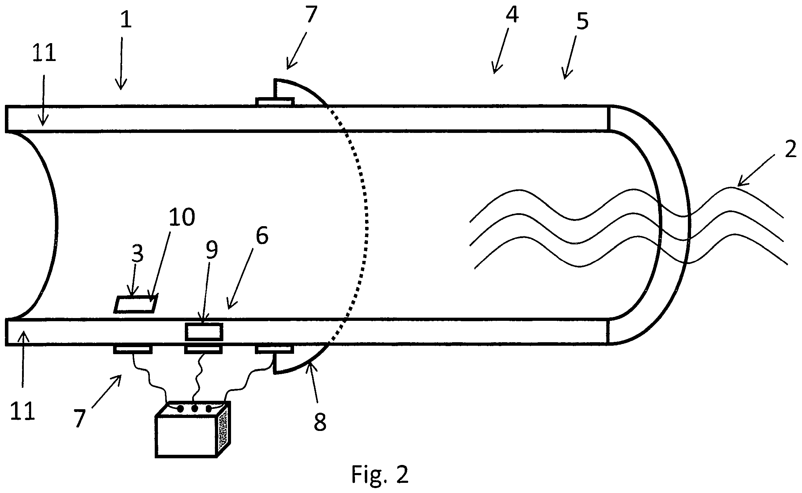

Fig. 2 zeigt einen Schnitt durch eine erfindungsgemäße Vorrichtung 1, wobei eine Funktionseinheiten 7 medienberührend und/oder beabstandet zum Medium der Materialströmung eingesetzt sind, wobei beispielhaft ein Mittel 6 zum Anbringen und/oder die Funktionseinheit 7 als Außenmittel 8 außen an dem Leitungsmittel 4, insbesondere ein Ultraschallmesser, und/oder als Wandungsmittel 9 in einer Wandung des Leitungsmittels 4, insbesondere ein Temperaturfühler, und/oder als Innenmittel 10 innen an dem Leitungsmittel 4, insbesondere ein Druckmesser und/oder ein pH-Wert-Messer.

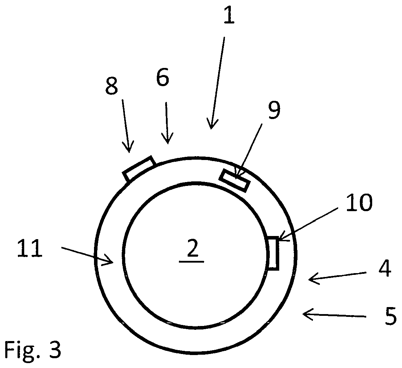

Fig. 3 zeigt einen schematischen Querschnitt durch eine Vorrichtung 1 mit einer schematischen, beispielhaften Anordnung eines Innmittels 10, eines Wandungsmittels 9 und eines Außenmittels 8, die alle mittels 3-D Druckverfahren in die Wandung 11 beispielsweise eines Leitungsabschnitts 5 eines Leitungsmittels 4 zum Transport einer Materialströmung 2 eingebracht sind.

### BEZUGSZEICHENLISTE

- 1: Vorrichtung zum Messen und/oder Regeln
- 2: Materialströmung
- 3: Sensor
- 4: Leitungsmittel
- 5: Leitungsabschnitt
- 6: Mittel zum Anbringen und/oder Hindurchführen einer Funktionseinheit
- 7: Funktionseinheit
- 8: Außenmittel
- 9: Wandungsmittel
- 10: Innenmittel
- 11: Wandung

## Patentansprüche

1. Vorrichtung (1) zum Messen und/oder Regeln von Eigenschaften einer Materialströmung (2), insbesondere Aerosolströmung und/oder Fluidströmung, insbesondere einer Gasströmung, insbesondere einer Luftströmung, und/oder einer Flüssigkeitsströmung,
umfassend ein Leitungsmittel (4) für die Materialströmung (2) mit zumindest einem Leitungsabschnitt (5), nämlich einen Rohrabschnitt, in dem die Materialströmung durchströmend und/oder umströmend durchleitbar ist, wobei zumindest eine Funktionseinheit vorhanden ist, wobei zumindest ein Mittel (6) zum Anbringen einer Funktionseinheit (7), nämlich eines Sensors (3) und/oder eines Signalgebermittels und/oder Signalempfangseinheit zur Messung und/oder Weitergabe von Eigenschaften der Materialströmung, nämlich ein RFID- und/oder NFC-Mittel und/oder Bluetooth, das insbesondere mit einer Dockingstation und/oder einem Computer und/oder Smartphone gekoppelt ist, in das Leitungsmittel (4) integriert ist, wobei zumindest das Leitungsmittel (4) für die Materialströmung mit dem Mittel (6) zum Anbringen einer Funktionseinheit (7) mittels eines additiven Fertigungsverfahrens, nämlich 3D-Druckverfahrens, im Wesentlichen einstückig, aufgebaut ist, und die Funktionseinheit (7) als Wandungsmittel (9) oder Innenmittel (10) in einer Wandung (11) des Leitungsmittels (4) mittels 3D Druckverfahren in die Wandung (11) eingebracht ist, wobei die Wandung (11) im Bereich des Wandungsmittels (9) oder Innenmittels (10) glatt verläuft und keine Durchführung durch die Wandung (11) gebildet ist, so dass Strömungshindernisse vermieden werden.

2. Vorrichtung nach Anspruch 1, **dadurch gekennzeichnet, dass** zumindest eine Funktionseinheit (7) nachrüstbar und/oder abnehmbar ausgebildet ist.

3. Vorrichtung nach Anspruch 1 oder 2, **dadurch gekennzeichnet, dass** zumindest eine Funktionseinheit (7) medienberührend oder beabstandet zum Medium der Materialströmung einsetzbar ist, wobei die Funktionseinheit (7) als Wandungsmittel (9) in einer Wandung des Leitungsmittels (4), insbesondere ein Temperaturfühler, und/oder als Innenmittel (10) innen an dem Leitungsmittel (4), insbesondere ein Druckmesser und/oder ein pH-Wert-Messer,

4. Vorrichtung nach einem der Ansprüche 1 bis 3, **dadurch gekennzeichnet, dass** mehrere Mittel (6) zum Anbringen einer Funktionseinheit (7) vorgesehen sind, insbesondere als normierte Einheit.

5. Vorrichtung nach einem der Ansprüche 1 bis 4, **dadurch gekennzeichnet, dass** zumindest ein Mittel (6) zum Anbringen einer Funktionseinheit (7) bei Nichtverwendung verschließbar ist.

6. Vorrichtung nach einem der Ansprüche 1 bis 5, **dadurch gekennzeichnet, dass** die Funktionseinheit (7) umfasst: ein Mittel zum Messen des Drucks, der Temperatur, des Durchflusses, des pH-Wert, des Co2-Gehalts, der Viskosität, des Härtegrads, des Mineralstoffgehalts, einen Schwebekörper-Durchflussmesser, oder eine Ultraschallmesseinrichtung.

7. Vorrichtung nach einem der Ansprüche 1 bis 6, **dadurch gekennzeichnet, dass** zumindest das Leitungsmittel (4) mit dem Mittel (6) zum Anbringen mit Metall und/oder Kunststoff und/oder Keramikpulver und/oder Gläser aufgebaut ist,

8. Vorrichtung nach einem der Ansprüche 1 bis 7, **dadurch gekennzeichnet, dass** das Leitungsmittel (4) für die Materialströmung mit dem Mittel (6) zum Anbringen einer Funktionseinheit (7) mit einer verstärkenden Struktur, insbesondere Wabenstruktur, aufgebaut ist.

9. Verfahren zum Herstellen einer Vorrichtung (1) zum Messen und/oder Regeln von Eigenschaften einer Materialströmung (2), insbesondere Aerosolströmung und/oder Fluidströmung, insbesondere einer Gasströmung, insbesondere einer Luftströmung, und/oder einer Flüssigkeitsströmung, wobei ein Leitungsmittel für die Materialströmung mit zumindest einem Leitungsabschnitt, nämlich einen Rohrabschnitt, in dem die Materialströmung (2) durchströmend und/oder umströmend durchleitbar ist, und eine Funktionseinheit aufgebaut werden, wobei zumindest ein Mittel zum Anbringen einer Funktionseinheit, nämlich eines Sensors (3) und/oder eines Signalgebermittels und/oder Signalempfangseinheit zur Messung und/oder Weitergabe von Eigenschaften der Materialströmung, nämlich ein RFID- und/oder NFC-Mittel und/oder Bluetooth, das insbesondere mit einer Dockingstation und/oder einem Computer und/oder Smartphone gekoppelt ist, in das Leitungsmittel (4) integriert wird, wobei zumindest das Leitungsmittel (4) für die Materialströmung mit dem Mittel zum Anbringen einer Funktionseinheit (7) mittels eines additiven Fertigungsverfahrens, nämlich 3D-Druckverfahrens, im Wesentlichen einstückig, aufgebaut wird, wobei die Funktionseinheit (7) als Wandungsmittel (9) oder Innenmittel (10) in einer Wandung (11) des Leitungsmittels (4) mittels 3D Druckverfahren in die Wandung (11) eingebracht wird, wobei die Wandung (11) im Bereich des Wandungsmittels (9) oder Innenmittels (10) glatt verläuft und keine Durchführung durch die Wandung (11) gebildet wird, so dass Strömungshindernisse vermieden werden,

## Claims

1. Apparatus (1) for measuring and/or regulating the properties of a material flow (2), in particular aerosol flow and/or fluid flow, in particular a gas flow, In particular an air flow, and/or a liquid flow, comprising a means (4) for the material flow (2) with at least one section (5), namely a section of pipe through which the material flow can be passed through and/or around it, at least one functional unit being provided, at least one means (6) for attaching a functional unit (7), namely a sensor (3), and/or Signal transducers and/or signal receivers for measuring and/or transmitting material flow properties i. e. an RFID and/or NFC and/or Bluetooth device coupled, in particular, to a docking station and/or a computer and/or smartphone, integrated into the conduit (4), whereby at least the conduit (4) for material flow is constructed with the means (6) for attaching a functional unit (7) by means of an additive manufacturing process, namely 3D printing, essentially one piece, and the functional unit (7) as a wall means (9) or internal means (10) In a wall (11) of the conduit (4) is inserted into the wall (11) by means of 3D printing, whereas the wall (11) runs smoothly in the area of the wall means (9) or inner means (10) and there is no passage through the wall (11) to avoid flow obstructions.

2. Apparatus according to claim 1, **characterised in that** at least one functional unit (7) is retrofitable and/or detachable.

3. Apparatus according to claim 1 or 2, **characterized in that** at least one functional unit (7) can be used in contact with the medium or spaced from the medium of the material flow, the functional unit (7) being used as a wall means (9) in a wall of the conduit means (4), in particular a temperature sensor, and/or as an Internal means (10) inside the conduit means (4), in particular a pressure gauge and/or a pH gauge.

4. Apparatus according to any one of Claims 1 to 3, **characterised in that** several means (6) are provided for attaching a functional unit (7), in particular as a standardised unit.

5. Apparatus according to any one of Claims 1 to 4, **characterised in that** at least one means (6) for attaching a functional unit (7) is lockable when not in use.

6. Apparatus according to any one of claims 1 to 5, **characterised in that** the functional unit (7) comprises: a means for measuring pressure, temperature, flow, pH, CO2 content, viscosity, hardness, mineral content, a float flow meter, or an ultrasonic measuring device.

7. Apparatus according to any one of claims 1 to 6, **characterised in that** at least the conductor means (4) is assembled with the means (6) for attachment with metal and/or plastic and/or ceramic powder and/or glass.

8. Apparatus according to any one of claims 1 to 7, **characterised in that** the material flow conduit (4) is constructed with the means (6) for attaching a functional unit (7) having a reinforcing structure, in particular a honeycomb structure.

9. Method for the manufacture of a device (1) for measuring and/or regulating the properties of a material flow (2), in particular aerosol flow and/or fluid flow, in particular a gas flow, In particular an air flow, and/or a liquid flow, comprising a means of conducting the material flow comprising at least one section, namely a section of pipe through which the material flow (2) can be conducted through and/or around it, and a functional unit, at least one means of attaching a functional unit, namely a sensor (3) and/or a transmitter and/or signal receiving unit for measuring and/or transmitting material flow properties, namely an RFID and/or NFC and/or Bluetooth device coupled in particular with a docking station and/or a computer and/or a smartphone, being integrated into the line means (4), whereby at least the material flow line means (4) with the means for attaching a functional unit (7) by means of an additive manufacturing process, namely 3D printing, essentially one piece, whereby the functional unit (7) wall media (9) or interior media (10) In a wall (11) of the conduit (4) is 3D-printed into the wall (11) whereby the wall (11) runs smoothly in the area of the wall media (9) or inner media (10) and does not form a passage through the wall (11) so as to avoid flow obstructions.

## Revendications

1. Dispositif (1) destiné à mesurer et/ou à réguler les caractéristiques d'un flux de matières (2), en particulier d'un flux d'aérosols et/ou de fluides, en particulier d'un flux de gaz, en particulier d'un flux d'air, et/ou d'un flux de liquides, comprenant un conducteur (4) pour le flux de matières (2) comportant au moins une section de conduites (5), c'est-à-dire une section de tuyauterie dans laquelle le flux de matières est perméable à travers et/ou à travers, comportant au moins une unité fonctionnelle (6) pour le montage d'une unité fonctionnelle (7), à savoir un capteur (3)/ou d'un émetteur de signaux et/ou d'une unité de réception de signaux permettant de mesurer et/ou de transmettre les caractéristiques du flux de matière, à savoir un support RFID et/ou NFC et/ou Bluetooth, couplé notamment à une station d'accueil et/ou à un ordinateur et/ou à un smartphone, Intégré dans le support de câblage (4), dans lequel au moins le support de câblage (4) pour le flux de matière avec le support (6) pour fixer une unité fonctionnelle (7) par un procédé de fabrication additif, à savoir le procédé d'impression 3D, essentiellement monobloc, et l'unité fonctionnelle (7) comme support mural (9) ou support interne (10) dans une paroi (11) du support de câblage (4) par impression 3D a été introduit dans la paroi (11), dans lequel la paroi (11) est lisse dans la zone de l'agent de paroi (9) ou du milieu (10) et qu'aucun passage n'est formé à travers la paroi (11) de manière à éviter les obstacles à l'écoulement.

2. Dispositif selon la revendication 1, **caractérisé par** au moins une unité fonctionnelle (7) pouvant être réaménagée et/ou amovible.

3. Dispositif selon la revendication 1 ou 2, **caractérisé par le fait qu'**au moins une unité fonctionnelle (7) peut être utilisée en contact avec le fluide ou à distance du fluide d'écoulement du matériau, l'unité fonctionnelle (7) servant de support (9) dans une paroi du fluide conducteur (4), notamment un capteur de température, et/ou comme support interne (10) à l'intérieur du fluide conducteur (4), notamment un manomètre et/ou un pH-mètre.

4. Dispositif selon l'une des revendications 1 à 3, **caractérisé par le fait que** plusieurs moyens (6) sont prévus pour la fixation d'une unité fonctionnelle (7), notamment en tant qu'unité normalisée.

5. Dispositif selon l'une des revendications 1 à 4, **caractérisé par** au moins un moyen (6) permettant de fixer une unité fonctionnelle (7) est verrouillable en cas de non-utilisation.

6. Dispositif selon l'une des revendications 1 à 5, **caractérisé par le fait que** l'unité fonctionnelle (7) comprend : un moyen de mesure de la pression, de la température, du débit, du pH, de la teneur en CO2, de la viscosité, de la dureté, de la teneur en minéraux, un débitmètre à corps en suspension ou un appareil de mesure à ultrasons.

7. Dispositif selon l'une des revendications 1 à 6, **caractérisé par le fait qu'**au moins le conducteur (4) avec le conducteur (6) est constitué de métal et/ou de matière plastique et/ou de poudre de céramique et/ou de verre.

8. Dispositif selon l'une des revendications 1 à 7, **caractérisé par le fait que** le conducteur (4) est construit pour le flux de matières avec le moyen (6) pour fixer une unité fonctionnelle (7) avec une structure de renforcement, en particulier une structure en nid d'abeilles.

9. Procédé de fabrication d'un dispositif (1) destiné à mesurer et/ou à réguler les caractéristiques d'un écoulement de matière (2), en particulier d'un écoulement d'aérosols et/ou d'un écoulement de fluide, en particulier d'un écoulement de gaz, en particulier d'air, et/ou d'un écoulement de liquide, comportant au moins une section de conduite, à savoir une section de tube dans laquelle le flux de matière (2) est perméable et/ou perméable, et une unité fonctionnelle comportant au moins un dispositif permettant d'installer une unité fonctionnelle, à savoir un capteur (3) et/ou d'un émetteur de signaux et/ou d'une unité de réception de signaux permettant de mesurer et/ou de transmettre les caractéristiques du flux de matière, à savoir un émetteur RFID et/ou NFC et/ou Bluetooth, couplé notamment à une station d'accueil et/ou à un ordinateur et/ou à un smartphone, est intégré dans le conducteur (4), en construisant au moins le conducteur (4) pour le flux de matière avec le moyen de fixer une unité fonctionnelle (7) au moyen d'un procédé de fabrication additif, à savoir le procédé d'impression 3D, essentiellement en une seule pièce, dans lequel l'unité (7) en tant qu'agent mural (9) ou agent interne (10) dans une paroi (11) de l'agent conducteur (4) est insérée dans la paroi (11) par un procédé d'impression 3D, la paroi (11) se déroulant en douceur dans la zone de l'agent mural (9) ou de l'agent intérieur (10) et aucun passage n'est formé à travers la paroi (11) afin d'éviter les obstacles à l'écoulement.
